Europäisches Patentamt

European Patent Office

Office européen des brevets

(19)

(11) Numéro de publication : **0 156 849**
**B1**

(12) FASCICULE DE BREVET EUROPÉEN

(45) Date de publication du fascicule du brevet :
09.09.87

(51) Int. Cl.⁴ : **G 01 F 1/52**, G 01 F 23/70

(21) Numéro de dépôt : 84903489.7

(22) Date de dépôt : 19.09.84

(86) Numéro de dépôt international :
PCT/FR 84/00205

(87) Numéro de publication internationale :
WO/8501345 (28.03.85 Gazette 85/08)

(54) ECHELLE DE MESURE DES MISES EN CHARGE DES CANALISATIONS A ECOULEMENT GRAVITAIRES.

(30) Priorité : 20.09.83 FR 8315039

(43) Date de publication de la demande :
09.10.85 Bulletin 85/41

(45) Mention de la délivrance du brevet :
09.09.87 Bulletin 87/37

(84) Etats contractants désignés :
AT BE CH DE GB LI LU NL

(56) Documents cités :
DE-A- 2 634 919
DE-A- 2 810 216
FR-A- 2 109 050
US-A-23 700 210

(73) Titulaire : CACHAN, Jean-Claude
9, rue de la Blondelière
F-45110 Chateauneuf S/Loire (FR)

(72) Inventeur : CACHAN, Jean-Claude
9, rue de la Blondelière
F-45110 Chateauneuf S/Loire (FR)

(74) Mandataire : Viard, Jean
Cabinet VIARD 28 bis, avenue Mozart
F-75016 Paris (FR)

EP 0 156 849 B1

Jouve, 18, rue St-Denis, 75001 Paris, France

### Description

La présente invention concerne un dispositif destiné à mesurer, à l'occasion de la mise en charge d'une canalisation à écoulement gravitaire, le niveau maximum atteint par l'effluent de transit par rapport au niveau du radier de ladite canalisation. Ce dispositif est donc particulièrement adapté à l'établissement des lignes piézométriques des réseaux d'assainissement gravitaires existants, et notamment des réseaux d'évacuation des eaux pluviales ou de type unitaire.

Les calculs nécessaires au dimensionnement des collecteurs d'assainissement sont régis par les directives techniques contenues dans l'Instruction Technique relative aux réseaux d'assainissement des agglomérations. Il ressort de ce texte que la connaissance des mises en charges maximum d'un collecteur — lors de la chute d'une pluie d'intensité déterminée — permet :

d'une part, de repérer les tronçons de collecteurs où la mise en charge a été particulièrement critique ;

d'autre part, de déterminer, par tronçon de collecteur, le débit maximun qui a transité dans lesdits tronçons de collecteurs. Si l'intensité de la pluie est connue, cette pluie peut être classée dans l'échelle des fréquences de retour des pluies pour la région considérée.

Des abaques permettent alors de déduire le débit qui aurait transité pour une pluie de fréquence décennale par exemple, pluie généralement prise en compte pour le dimensionnement des canalisations d'assainissement.

La connaissance de la ligne piézométrique d'une canalisation — pour une pluie d'intensité déterminée — présente donc beaucoup d'intérêt pour le technicien chargé de déterminer le diamètre qu'il faudrait donner à cette canalisation pour la rendre suffisante dans le cadre des directives techniques actuelles.

Des systèmes de mises en charge de canalisations d'assainissement existent. Ce sont généralement des systèmes enregistreurs, sophistiqués et coûteux, donc non vulgarisés.

L'invention comporte un dispositif comme défini dans la revendication 1. La mesure du niveau d'un liquide utilisant des bombes flottantes est connue des documents US-A-2 370 210, DE-A-2 810 216 et DE-A-2 634 919. Une telle mesure utilisant un aimant flottant qui déplace des billes d'acier de leurs positions de repos est connue de FR-A-2 109 050.

L'intérêt de la présente invention est de proposer un système simple, beaucoup moins onéreux, d'une précision suffisante et facile à mettre en place même pour un personnel non spécialisé. Ce système pourrait donc être vulgarisé auprès des techniciens de terrain confrontés aux problèmes de restructuration et renforcement des réseaux.

Présentation des dessins

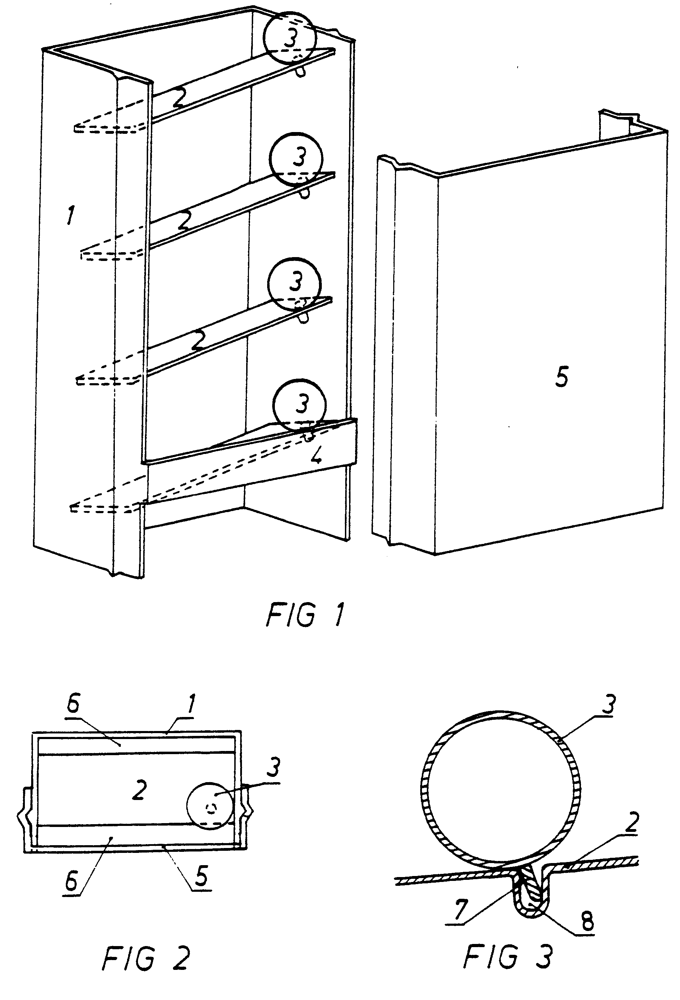

La figure 1 représente une vue en perspective selon l'invention, cache 5 enlevé.

La figure 2 représente une vue de dessus du dispositif selon l'invention.

La figure 3 représente en coupe une vue de détail d'une boule 3 sur son étagère 2 support dans la position du dispositif prêt à fonctionner.

Le dispositif constituant la présente invention s'installe verticalement contre la paroi d'un regard de visite existant sur le collecteur à tester. Il est constitué d'un profilé 1 en matière plastique transparente rigide, formant support d'étagères 2 constituées de la même matière. Ces étagères 2 disposées à intervalles réguliers sont destinées à constituer le support au repos de boules 3 creuses en matière plastique de couleur. Ces boules 3 comportent un appendice 7 qui, introduit dans le trou borgne 8 de l'étagère 2, maintient au repos la boule 3 dans la position du système prêt à fonctionner.

Deux étagères 2 contiguës forment également cage d'emprisonnement d'une boule dans les phases actives du système. Le profilé 1 est rigidifié tous les 0,50 m par une plaque 4 en matière plastique de couleur, facilitant par ailleurs la lecture du système. Entre deux plaques 4 consécutives un cache 5 en matière plastique transparente isole l'intérieur du système des agents extérieurs. La longueur du dispositif est fonction de la profondeur du regard de visite dans lequel il doit être installé.

Lors de la montée de l'effluent dans le regard de visite, qui fait fonction de cheminée d'équilibre, l'effluent pénètre dans le système par les lumières 6 situées de part et d'autre des étagères. Au fur et à mesure de la montée de l'effluent, les boules 3 se trouvent soumises à la poussée d'Archimède, et pour un niveau déterminé quittent leur position au repos et divaguent dans la cage formée par : 2 étagères 2 consécutives, le profilé 1 et le cache 5. Lors de la baisse de l'effluent dans le regard de visite, l'effluent emprisonné baisse également dans le dispositif. L'inclinaison des étagères 2 enlève aux boules 3 toute chance de pouvoir par hasard se retrouver dans la même position qu'au repos avant la montée de l'effluent.

Il en résulte que la boule la plus haute ayant quitté sa position au repos donne l'indication du niveau maximum atteint par l'effluent et cela avec une imprécision de quelques centimètres. La précision de la mesure dépend de l'écartement des étagères.

Quelques centimètres par défaut paraît une précision suffisante dans le domaine de l'assainissement urbain, compte tenu de la précision des méthodes de calcul utilisées.

La longueur du dispositif noyé, ajoutée à la distance — fixée à la pose du dispositif — entre le radier de la canalisation et la position de déjaugeage de la boule inférieure, donne la mesure de la hauteur maximum atteinte par l'effluent dans le regard de visite.

La longueur de dispositif noyé est obtenue en multipliant le nombre de boules ayant quitté leur position de repos par l'intervalle constant existant entre deux étagères consécutives.

Lecture achevée, il suffit d'ôter les caches 5, remettre les boules 3 dans leur position au repos, remettre les caches 5, et le dispositif est à nouveau apte à fonctionner.

La présente invention est essentiellement destinée à être utilisée par les techniciens en génie sanitaire — Ingénieurs conseils, services techniques municipaux, services techniques de l'Etat — lors des études de restructuration et renforcement des réseaux d'assainissement urbains et ruraux insuffisants.

## Revendications

1. Dispositif pour mesurer les hauteurs de mise en charge des canalisations à écoulement gravitaire d'un effluent caractérisé en ce qu'il est composé d'une gaine transparente constituée par un profilé (1) et des caches (5) en forme de u, à l'intérieur de laquelle des étagères (2) parallèles entre elles, disposées à intervalles constants et permettant la montée et la baisse de l'effluent dans la gaine, les étagères constituant respectivement les supports de boules (3) creuses, les boules comportant un appendice (7) qui, introduit dans un trou borgne (8) d'une étagère (2), maintient au repos la boule (3) dans la position du système prêt à fonctionner, la montée de l'effluent dans la gaine causant le départ des boules de leurs positions de repos par flottement.

2. Dispositif selon la revendication 1 caractérisé en ce que les boules (3) peuvent être pleines mais constituées d'un matériau de densité nettement inférieure à celle de l'effluent de transit de la canalisation à tester.

3. Dispositif selon la revendication 1 caractérisé en ce que les boules (3) peuvent être creuses et constituées de tout matériau leur permettant de flotter sur l'effluent.

4. Dispositif selon les revendications 1, 2, 3 caractérisé en ce qu'il peut être réalisé en métal.

5. Dispositif selon les revendications 1, 2, 3 et 4 caractérisé en ce qu'une étagère (2) forme un plan incliné par rapport à deux directions horizontales orthogonales.

6. Dispositif selon les revendications 1, 2, 3, 4 et 5 caractérisé en ce que la largeur des étagères (2) laisse des lumières rectangulaires (6) suffisantes pour que l'effluent monte et baisse dans la gaine en même temps que dans le regard de visite où le dispositif est installé.

7. Dispositif selon les revendications 1, 2, 3, 4, 5 et 6 caractérisé en ce que la largeur des lumières (6), situées de part et d'autre de l'étagère (2) est inférieure en diamètre des boules (3).

8. Dispositif selon les revendications 1, 2, 3, 4, 5, 6 et 7 caractérisé en ce qu'il comporte des entretoises (4) de rigidification du profilé (1) installées à intervalles constants, colorées et constituant les graduations d'une échelle de lecture des hauteurs.

## Claims

1. A device for measuring the head in a gravity flow effluent pipelines, the device being characterized in that it comprises a transparent sheath constituted by a bar (1) and channel section covers (5), with mutually parallel shelves (2) disposed at constant intervals therein and allowing effluent to rise and fall inside the sheath, the shelves constituting supports for respective hollow balls (3) each including an appendix (7) which, when inserted in a blind hole (8) in a shelf (2), holds the ball (3) in its rest position while the system is ready for use, the rise of effluent in the sheath causing balls to leave their rest positions by floating.

2. A device acording to claim 1, characterized in that the balls (3) may be solid but made of a material whose density is much less than that of the effluent transiting via the pipeline to be tested.

3. A device according to claim 1, characterized in that the balls (3) may be hollow and constituted by any substance enabling them to float on effluent.

4. A device according to claims 1, 2, 3, characterized in that it may be made of metal.

5. A device according to claims 1, 2, 3, and 4, characterized in that each shelf (2) forms a plane inclined relative to two orthogonal horizontal directions.

6. A device according to claims 1, 2, 3, 4, and 5, characterized in that the shelves (2) are of such a width as to leave rectangular slots (6) of suitable for allowing effluent to rise and fall inside the sheath at the same time as it rises and falls in the inspection manhole in which the device is installed.

7. A device according to claims 1, 2, 3, 4, 5, and 6, characterized in that the width of the slots (6) on the sides of the shelves (2) is less than the diameter of the balls (3).

8. A device according to claims 1, 2, 3, 4, 5, 6, and 7, characterized in that it includes coloured bar-stiffening spacers (4) installed at constant intervals and constituting graduations on a scale for reading the head.

## Patentansprüche

1. Vorrichtung zur Messung der Speicherhöhen von Kanalisationen, bei denen das Abwasser durch Schwerkraft abfließt, dadurch gekennzeichnet, daß sie aus einer durchsichtigen, aus einem Profilteil (1) bestehenden Hülle und aus U-förmigen Abdeckungen (5) zusammengesetzt ist, wobei im Inneren der Hülle zueinander parallele Regalböden (2), die in konstanten Abständen angeordnet sind und das Ansteigen und Absinken des Abwassers in der Hülle zulassen, jeweils Auflagen für Hohlkugeln (3) bilden, die einen Ansatz (7) aufweisen, der, in ein Sackloch (8) eines Regalbodens (2) eingesteckt, die Kugeln (3) in der betriebsbereiten Stellung des Systems in Ruhe hält, während das Ansteigen des Abwassers in der Hülle das Auslösen der Kugeln aus ihren Ruhestellungen durch Aufschwimmen hervorruft.

2. Vorrichtung nach Anspruch 1, dadurch gekennzeichnet, daß die Kugeln (3) aus einem Vollmaterial mit einer deutlich geringeren Dichte als derjenigen des die zu untersuchende Kanalisation durchfließenden Abwassers bestehen können.

3. Vorrichtung nach Anspruch 1, dadurch gekennzeichnet, daß die Kugeln (3) hohl und aus jedem Material aufgebaut sein können, das sie auf dem Abwasser aufschwimmen läßt.

4. Vorrichtung nach den Ansprüchen 1, 2, 3, dadurch gekennzeichnet, daß sie aus Metall hergestellt sein kann.

5. Vorrichtung nach den Ansprüchen 1, 2, 3 und 4, dadurch gekennzeichnet, daß ein Regalboden (2) eine bezüglich zweier horizontaler, rechtwinkliger Richtungen geneigte Ebene bildet.

6. Vorrichtung nach den Ansprüchen 1, 2, 3, 4 und 5, dadurch gekennzeichnet, daß die Breite der Regalböden (2) einen ausreichenden rechteckigen Spülschlitz (6) frei läßt, damit das Abwasser in der Hülle zur selben Zeit ansteigt und absinkt wie in dem Schacht, in den die Vorrichtung eingebaut ist.

7. Vorrichtung nach den Ansprüchen 1, 2, 3, 4, 5 und 6, dadurch gekennzeichnet, daß die Breite der Spülschlitze (6), die zu beiden Seiten des Regalbodens (2) angeordnet sind, geringer ist als der Durchmesser der Kugeln (3).

8. Vorrichtung nach den Ansprüchen 1, 2, 3, 4, 5, 6 und 7, dadurch gekennzeichnet, daß sie zur Versteifung des Profilteiles (1) Querverbindungen (4) aufweist, die in konstanten Abständen angebracht und gefärbt sind und die Stufen einer Leiter zum Ablesen der Höhen bilden.

0 156 849

FIG 1

FIG 2

FIG 3